# EUROPEAN PATENT APPLICATION

(11) **EP 4 708 943 A1**
(43) Date of publication of application: **11.03.2026**
(21) Application number: 24382963.7
(22) Date of filing: 09.09.2024
(51) Int. Cl.: H04W 12/04, H04W 8/20, H04W 12/30

(54) **METHOD, CONFIGURATION PROGRAM, DIVERSIFICATION PROGRAM DATASET, COMPUTER-READABLE DATA CARRIER AS WELL AS SERVER DEVICE FOR CONFIGURING A USER DEVICE**

(71) Applicant: Giesecke+Devrient Mobile Security Germany GmbH, 81677 München (DE)
(72) Inventor: PATIÑO, David, 08820 El Prat de Llobregat (Barcelona) (ES); GIFRE, Clara, 08820 El Prat de Llobregat (Barcelona) (ES); RUAU, Federico, 08820 El Prat de Llobregat (Barcelona) (ES); MUNTANER, Joan Francesc, 08820 El Prat de Llobregat (Barcelona) (ES)
(74) Representative: LKGLOBAL Partnerschaftsgesellschaft mbB

(57) **Abstract**

A method, as well as a corresponding configuration program (10), a diversification program dataset (J), a computer-readable data carrier (11, 12, 13), a user device (3), and a server device (4) are provided, wherein for configuring the user device (5), the method comprises the steps of providing a secure element (6) of the user device (5), such as an eUICC, with at least one user profile (P) containing diversified data (L) for personalizing the secure element (6); and providing a diversification program dataset (J) configured to manage at least parts of diversified data (L) to securely alter at least one security credential (H) as a part of a basic data subset (B) of the profile dataset (P).

## Description

### Technical Field

The present disclosure relates to the field of configuring user devices, for example, smart cards, transaction cards, personal mobile devices or Internet-of-Things (IoT) devices, or alike, for being securely operated by an authorized user, for instance for conducting secure transactions and/or participating in communication networks. In particular, the present disclosure relates to a method of configuring a user device, in particular for secure operation involving a trusted entity, a configuration program for configuring a user device, in particular for secure operation involving a trusted entity, a diversification program dataset for a secure element of a user device, such as an eUICC, a computer-readable data carrier, a user device, in particular configured for allowing secure operation involving a trusted entity, and a server device, in particular a security server providing a secure location, in particular configured for allowing secure remote operation of user devices involving a trusted entity.

### Background of the Invention

User devices, such as smart cards (e.g., so-called java cards), identification cards, transaction cards, personal mobile devices or IoT-devices, are known from the prior art. The user devices are commonly configured to employ electronic subscriber profiles authenticating a user for secure transactions or communicating on telecommunication networks, e.g., mobile networks. Such user devices are typically equipped with an electronic/embedded secure element (SE, eSE), also known as tamper resistant element (TRE), which may take the form of an UICC, eUICC, iUICC, SIM, eSIM, iSIM, or alike, configured to store one or more of the electronic subscriber profiles that may allow the user devices to connect to one or more mobile networks. A subscriber profile (e.g., an eSIM profile) may be generated by a mobile network operator (MNO) and may be stored, e.g., downloaded to a mobile user device. The subscriber profile may then be installed on a secure element of the user device and used for communication over a corresponding mobile network by the user device.

The secure elements are run by operation systems (OS) containing software and/or firmware for operating the secure elements. Those OS need to be up to date in order to provide full and reliable functionality of the secure elements. An OS Update is especially relevant with the deployment of embedded Secure Elements (eSE) in the form of eUICC or alike. As opposite of traditional pluggable SIMs that can be inserted and removed, eSEs are soldered into user devices, making it very difficult (or costly) to replace them during the life cycle of the user devices.

Consequently, there is a need for so-called firmware-upgrades and/or updates that allow to modify the content of the eSE in the event that it has to be kept up to date and/or a technical issue has to be fixed. For example, one possible reason for that firmware has to be kept up to date is if a related standard, such as a GSMA specification, relating to the user device changes or is being newly implemented. In any case, such updates can be carried out with the help of an Open Firmware Loader (OFL), or alike, which is specifically designed software component in charge of firmware upgrades including OS updates in the secure element. The need to be able to update the software for certain SE/TRE has generated many different approaches worldwide. In some solutions, there is a separate entity (ITL - Image Trusted Loader, OFL, Update Agent) which is kept in charge in the SE/TRE while the full OS, or only part of it, is changed. The states of the SE/TRE are then not really defined according to any global entity.

WO 2023 274579 A1 relates to methods, apparatus, and systems for implementing an encryption scheme for providing a software image to a secure element. The software image is converted into a sequence of ciphered blocks, which is protected with an authentication tag to obtain a sequence of protected blocks, which are then transmitted to an update agent on the secure element. The steps of converting the software image into a sequence of ciphered blocks and protecting the sequence of ciphered blocks with an authentication tag are implemented by an authenticated encryption function using a same block cipher.

WO 2023 274578 A1 relates to a method, a data structure, and an update agent for implementing a scheme for downloading an operating system image onto a secure element. The update agent receives from an external device an installation package for installing an operating system onto the secure element. The update agent requests control of the secure element and loads the operating system received with the installation package into the secure element, after which control of the secure element is transferred to the operating system.

WO 2023 274577 A1 relates to a method, an update agent and an off-card entity for implementing an authentication scheme for providing a software image to a secure element. An installation package comprising a package binding function for linking the installation package to the secure element, a manifest, a manifest signature generated using a block-cipher algorithm, and a software image is received at an update agent within the secure element. The update agent implements an authentication and integrity scheme by verifying various signatures contained within the installation package and install the software image in case of successful authentication and integrity verification.

Furthermore, the subscriber profile, i.e. a structure and format thereof, as well as the respective diversified data, including security credentials, etc., should be adapted to the respective OS. According to the prior art, there are a number of ways of installing the subscriber profile on a SE/TRE, which may include providing the diversified and/or personalized data to the SE/TRE. In general, this can be done either via normal commands communicating with the OS or in other ways during production in factory, for example, by a so-called "Diversified Data Injection" referring to a deployment of different data for each TRE in factory before issuance of the SE/TRE to a customer.

EP 4 124 980 A1 relates to a method for personalizing a software, in particular an operating system OS, in a SE, comprising the steps of loading a software image into the memory of the SE; loading a software personalization record comprising personalization data into the memory of the SE; and personalizing the loaded software image using the software personalization data. Personalization of the software image is initiated by an internal agent of the SE. Preferably, initiation personalization of the software image by the internal agent is triggered by a trigger event that is detected by the internal agent, the trigger event being unrelated to software personalization.

EP 4 124 979 A1, in a first aspect, relates to a method for updating an installed software, in particular an operating system, a in a secure element. The method comprises the steps of providing an update agent in the secure element; securing specific data required for operating the installed software in a memory of the update agent; loading a software image into the secure element, the software image representing an update of the installed software; and making the software image operable by the secured specific data. According to further aspects, the present invention relates to a respective secure element, an update agent, and a computer-program product in relation to other aspects of the invention.

EP 4 124 976 A1 relates to an update agent, a secure element containing the update agent, and a method for loading and personalizing a software in the secure element. In a first step, an update agent is loaded into the secure element. In a further step, software personalization data is loaded into the secure element, and stored in the update agent. Subsequently, the software is loaded into the secure element and personalized using the software personalization data stored in the update agent.

Methods for configuring and upgrading/updating secure elements of user devices, involving OS updates and the provision of user profiles, including diversified and/or personalized data, as described above, may not fully satisfy all requirements regarding their deployability and availability on the one hand, as well as functional safety and security on the other hand. In particular the provision of diversified and/or personalized data, such as in "Diversified Data Injection" generally happens in factory during production and is generally blocked afterwards, such as after when the SE/TRE is issued to a customer. Many of the data diversified and/or personalized here cannot be provided via common commands afterwar issuance for different reasons.

For example, it is desirable that both, the OS, and the secure elements have the same origin and preferably same state of development in order to ensure functional safety and security. However, due to deployability and availability restrictions, it may not be always assured that the OS, as well as the secure elements have the same origin, corresponding versions, or meet certain future requirements, especially if an implementation of a new specification or standard for operating the user devices is expected to be issued during lifetime of the user device and/or respective secure element. This may limit the functionality, especially a spectrum of (future) capabilities, of the user device, may compromise functional safety and security when operating user devices, or may even lead to that the devices cannot be configured properly, keeping in mind that not only the OS but also related data structures including diversified data can be affected by updating procedures.

Furthermore, when the provisioning of certain pieces of data, such as diversified data, is restricted to a very early phase of the production process, it places heavy restrictions on timelines and planning. This potentially complicates certain aspects of production, such as stock accumulation, especially if data requirements cannot be well defined in advance. Production may be further complicated when different parties are involved in the production process, for example, if one party produces the SE/TRE as well as respective personalized software images, and another party provides the OS, while a third one may be in charge of the diversified data. In such a case, special processes would be required for data provisioning within each of the factories involved. Even though, such processes may be partially covered by in-factory personalization functionalities as known from the prior art, nevertheless, different provisioning methods for different factories and manufacturers may occur, which may in turn again compromise certain requirements regarding deployability and availability of SE/TRE on the one hand, as well as their functional safety and security on the other hand.

### Summary of the Invention

It may be seen as an object to improve the interaction between the secure elements, their OS and respective diversified data. In particular, it may thus be seen as an object to provide a way to handle secure elements, their OS and respective diversified data in a way that a future proof functional spectrum, safety and security may be assured, while not compromising deployability, availability, and/or data integrity. These objects are at least partly achieved by the subject-matter of the independent claims.

According to an aspect, a method of configuring a user device, in particular for secure operation involving a trusted entity, is provided, the method comprising the steps of providing a secure element of the user device, such as an eUICC, with at least one user profile containing diversified data for personalizing the secure element; and providing a diversification program dataset configured to manage at least parts of diversified data to securely alter at least one security credential as a part of a basic data subset of the profile dataset.

According to an aspect, a configuration program for configuring a user device, in particular for secure operation involving a trusted entity, is provided, wherein the configuration program comprises instructions which, when the configuration program is executed by a secure element, cause the secure element to carry out a corresponding method.

According to an aspect, a diversification program dataset for a secure element of a user device, such as an eUICC, is provided, the diversification program dataset comprising a at least parts of a corresponding configuration program and/or configured to carry out a corresponding method. An operating system dataset for a secure element of a user device, such as an eUICC, may be provided, the operating system dataset may comprise at least parts of a corresponding configuration program and/or may be configured to carry out a corresponding method and/or to interact with a respective configuration program and/or diversification program dataset.

According to an aspect, a computer-readable data carrier is provided, having stored thereon a corresponding configuration program according and/or a corresponding diversification program dataset.

According to an aspect, a user device is provided, in particular configured for allowing secure operation involving a trusted entity, wherein the user device is configured to carry out a corresponding method, comprises a corresponding configuration program, a corresponding diversification program dataset and/or a corresponding computer-readable data carrier.

According to an aspect, a server device is provided, such as a security server providing a secure location, in particular for allowing secure remote operation of user devices involving a trusted entity, wherein the server device is configured to carry out a corresponding method, comprises a corresponding configuration program, a corresponding diversification program dataset and/or a corresponding computer-readable data carrier.

The secure element may be understood as a tamper resistant element (TRE). The basic data subset may be updated by means of at least one update data subset. The update data subset may comprise the following version at least one diversified data subset which may define a version of a user profile and/or respective diversified data.

The user profile may be provided as a user profile dataset comprising a structural data subset defining a structure of the user profile, and a basic data subset defining the actual personalization of the user profile. The diversification program dataset may provide a and/or be provided as a diversified data manager (DDM) for managing the diversified data. Additionally, an installation program dataset can be provided for managing installation process, such as installing and/or updating an operating system dataset or respective update data subsets. The installation program dataset may implement an installation state machine which can be located in the installation program dataset and configured to provide information regarding a status of the installation process. Both, the diversification program dataset and the installation program dataset may be integrated as data subsets into a customization dataset, such as a firmware suite allowing for customization of data on the secure element.

A complete operating system update dataset and/or subsets thereof comprising at least one update data subset may be provided for at least partially replacing the previously installed operating system dataset. Data objects can be and/or comprise any kind of data element or constructs of data, including, but not limited to data gateways, data accesses, data streams, data blocks, data files, or alike, such as binaries, sounds, images, videos, text, emails, documents, images, folders, etc. The expression "dataset" can be understood as any kind of data composition, such as a file, including source code, object code, or binaries, which may have or fulfil a certain technical function.

The proposed solution allows for providing updated operating system setups, basic data subsets and/or diversified data, without the need to erase previous data objects, such as other personal and/or diversified data stored on the user device and/or the secure element by the user. This enables a flexible provision of diversified to secure elements. Thus, the secure element the does not require to be provided any of the diversified data before leaving the factory and can be reconfigured with diversified data at any point during its life cycle.

Sensible data can still be provisioned in a certified space, such as a secure storage location of the secure element, by means of the diversification program dataset, e.g. in the form of a Diversified Data Manager (DDM) instead of by other means. Consequently, the proposed solution is compatible with previously known data provisioning processes, such as defined by the GSMA, which commonly restricts some data provisioning to certain environments. For example, a batch of secure elements can be provided with the diversification program dataset at a production facility, then be provided to a manufacturing facility where an OS and diversified data can be provided to the secure element by means of the diversification program dataset, while leaving an option of accumulating stock and provision other, less restricted, sets of data, e.g., for some IoT devices, at later production stages, such as for just-in-time delivery. It is even conceivable to provide blank and semi-blank secure elements in order to maximize flexibly and enable a decentralized distribution of the secure elements and/or respective user devices.

The proposed solution thus has the advantage over the prior art, that the operating system dataset can be delivered along with basic data subsets to any manufacturing facility, including OEM/ODM vendor facilities, and fabrication facilities of the secure element, regardless of a change to standards and/or specifications relating to the user device between the delivery and a later point of the time of deployment of user devices and/or the secure elements to customers. At first, the operating system dataset and/or basic data subsets allow for configuring the user device and/or the secure element in a way that it can be deployed to customers, enabling them to adopt upcoming or following standards and/or specifications along with a respective functional spectrum, safety, and security by means of the operating system dataset along with application data subsets. Later on, the diversification program dataset enables to update and manage at least parts of respective diversified data to securely alter security credentials as a part of the basic data subsets) of the profile dataset without the need to reset the user device and/or secure element back to default settings and/or operate them in a secure environment.

Hence, the proposed solution allows for a configuration and update of the secure element "Over-The-Air", removing the necessity of physically replace the secure element for updates and/or upgrades. The data to be altered and/or updated can be kept minimal. Thereby, secure elements, their OS and/or diversified data can be handled in a way that a future-proof functional spectrum, safety and security may be assured, while not compromising their deployability and availability.

Further developments can be derived from the dependent claims and from the following description. Features described with reference to a user device, secure element, server device and components thereof may be implemented as method steps, or vice versa. Therefore, the description provided in the context of the user device, secure element, server device and their components apply in an analogous manner also to respective methods. In particular, features and functions of the user device, secure element, server device and their components may be implemented as method steps which in turn may be implemented as respective device features or functions.

According to an embodiment of the method, the diversification program dataset allows for personalizing the secure element in at least one pre-issuance condition and/or at least one post-issuance condition, wherein the at least one pre-issuance condition refers to a point of time before issuing the user device to a user and the at least one post-issuance condition refers to a point of time after issuing the user device to a user. The user device and/or secure element may be configured such that after once enabling the post-issuance condition, the user device and/or secure element cannot be transferred back to the pre-issuance condition. The pre-issuance condition may be reserved for the manufacturing process and highly sensitive data provisions, such as a loading the diversification program dataset, an installation program dataset, operating system dataset, certain security credentials, and/or user profile related data onto the user device and/or secure element. Consequently, allowing personalization of the secure element in the pre-issuance condition and/or post-issuance condition by means of the diversification program dataset helps in providing an enhanced flexibility of the personalization process, possibly while using certain restrictions to accessing the basic data subset of the profile dataset to a connection to a trusted entity or at least data provisioning facilities certified by a trusted entity, involved in operating the diversification program dataset. This helps in flexibly and efficiently, yet securely and reliably manufacturing as well as configuring the user device.

According to an embodiment of the method, the the basic data subset comprises security credentials. The security credentials may be administered by the server device and/or trusted entity. The security credentials in the basic data subset may be configured such that outside of a manufacturing environment and/or in a post-issuance state they can be only accessed via the diversification program dataset. This further helps in flexibly and efficiently, yet securely and reliably manufacturing as well as configuring the user device.

According to an embodiment of the method, the basic data subset comprises at least one profile identifier, security keys and/or authentication certificate. The profile identifier may be a unique identifier for an unequivocally identified the user profile. Security keys and/or authentication certificate may be configured for accessing the user profile and/or to register with an MNO and/or a trusted entity. Allowing to alter at least one profile identifier, security keys and/or authentication certificate by means of the diversification dataset may further help in flexibly and efficiently, yet securely and reliably manufacturing as well as configuring the user device.

According to an embodiment of the method, the the diversification program dataset is configured to allow remote access to at least a part of the basic data subset. For example, the remote access can be granted to and/or via the server device, possibly, involving the trusted entity. This can additionally help in flexibly and efficiently, yet securely and reliably manufacturing as well as configuring the user device.

According to an embodiment of the method, the wherein the diversification program dataset is personalised with diversified data. The diversified data may be provided in the form of and/or implemented as at least one user profile or related data. Thereby, the secured state may be enabled with the help of respective security credentials. This additionally helps in flexibly and efficiently, yet securely and reliably manufacturing as well as configuring the user device.

According to an embodiment of the method, the diversification program dataset is configured to update the basic data subset by providing an update data subset to the secure element. At least one update data subset can be sent to the secure element for updating the at least one user profile installing the at least one update data subset on the secure element. An operating instance implemented by the operating system dataset can hand over control of the installation process to the diversification program dataset, in particular, to a respective diversification instance for running the update in a secured state. After successful installation or accomplishing at least a part of the update process, the diversification program can hand over control back to an operating instance of the operating system dataset.

The at least one update data subset may be provided as a data image. The update data subset may comprise a following version at least one basic data subset defining a certain version of the at least one and/or -related data objects. This may or involve a respective program application and/or application programming interface (API). A complete basic data update dataset comprising the at least one update data subset may be provided for replacing the previously installed basic data subset and/or at least one user profile.

The diversification instance can secure at least one secure data element from being altered during at least a part of the installation process. The diversification instance can perform at least one secure data change and/or exchange during the installation process. During at least a part of the installation process, the operating instance and/or diversification instance can be in a supervision state for supervising the installation process. After finishing at least a part of the installation process the operating instance can initiate a reboot of the secure element and/or performs necessary updates if predefined data formats do not match required data formats defined by the at least one update data subset.

According to an embodiment of the method, the update data subset is received by and/or from the trusted entity. For example, an MNO or similar entity may provide the update data subset to the trusted entity and/or request a respective updating procedure to be performed by the trusted entity. The secure element and/or a respective user device may then receive the update data subset from the trusted entity. This may further help in flexibly and efficiently, yet securely and reliably manufacturing as well as configuring the user device.

According to an embodiment of the method, the update data subset is adapted and/or serialised to be handled by an operating system dataset for operating the secure element. Alternatively, or additionally, the update data subset may be stored in an adapted and/or serialized format in a dedicated secure memory location. For example, such a memory location may be administered by the diversification program dataset and/or the operating system dataset. This additionally helps in flexibly and efficiently, yet securely and reliably manufacturing as well as configuring the user device.

According to an embodiment of the method, the diversification program dataset this configured to communicate via a at least one secure interface of the secure element and/or to allow secure access to the secure element. The secure interface may be configured according to respective security standards, such as standards identified by the GSMA, GlobalPlatform (GP), or alike. This can further help in flexibly and efficiently, yet securely and reliably manufacturing as well as configuring the user device.

### Brief Description of the Drawings

- Fig. 1: is a schematic illustration of a configuration system configured for carrying out a method according to the present invention.
- Fig. 2: is a schematic illustration of facilities involved in the configuration system.
- Fig. 3: is a schematic illustration of a possible data exchange between the facilities involved in the configuration system making use of a method according to the present invention.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

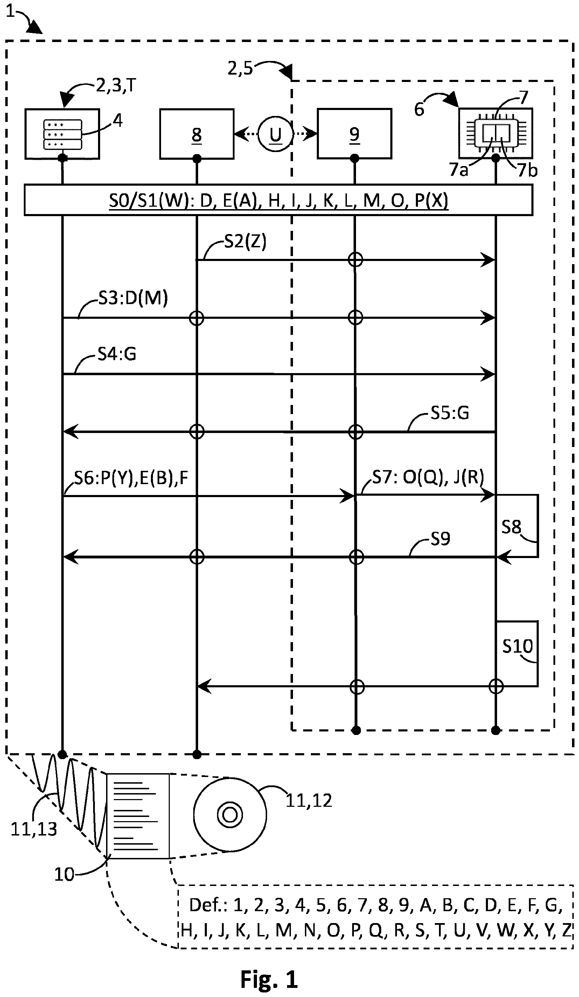

Fig. 1 shows a schematic illustration of a configuration system 1 comprising a computing device 2, for instance, in the form of a server device 3 controlled by a trusted entity T, which can include a hardware security module 4 adapted to store, manage and/or provide operating system datasets O for configuring a further computing device 2, for example, in the form of a user device 5 which may be embodied an Internet of Things (IoT) device, such as a multimedia device, camera, speaker, household appliance, measurement device, industrial installation, vehicle, vending machine, or alike, to be associated with a machine entity, and/or as a smart card, an identification card, a transaction card, a personal mobile device, such as a smartphone, smart-watch, etc., to be associated with a personal entity. For example, the server device 3 may be provided in the form of a Server for Subscription Manager Data Preparation + (SM-DP+).

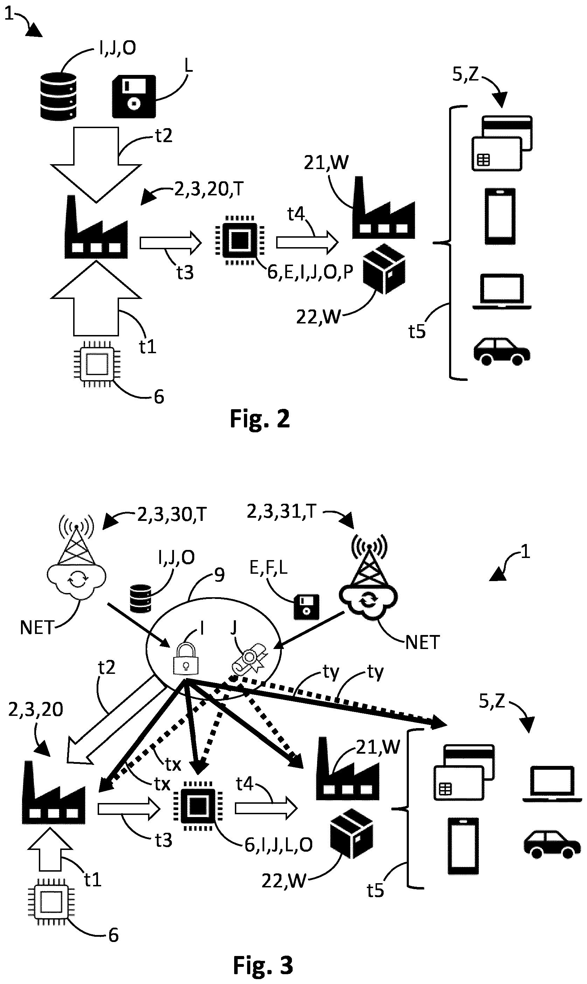

In the present example, the user devices 5 may be adapted for secure operation, transactions and/or communication, e.g., via a telecommunication network (see Fig. 3) by means of at least one user profile dataset P to be saved in a respective secure element 6 or tamper resistant element (TRE), such as an UICC, eUICC, iUICC, SIM, eSIM, iSIM, SE, eSE, or alike, provided in the form of a computer chip. The user profile data sets P are generated based on respective personal records contained in data files on the server device 3, in particular, the hardware security module 4 thereof. For storing and managing user profile data sets P on the secure elements 6, an operating system dataset O is installed on the secure element 6, for example, in a secure storage location 7, such as an Issuer Security Domain - Root (ISD-R) provided on the secure element 6. The secure storage location may provide different memory regions, such as at least one first memory region 7a and at least one second memory region 7b.

The user profile dataset U comprises a basic data subset E which can be provided as a previous version A and a later version B defining a former version X and a later version Y, respectively, of a user profile C configured according to respective diversified data L and/or to access at least one data object D. The basic data subset E can be updated from the previous version A to the later version B by means of an update data subset F. The user profile U, diversified data L, and/or data object D can have a predefined data format and the required data format corresponding to the former version X and the later version Y, respectively, of the basic data subset E.

A management application 8 may be provided which can be configured to allow a user U to communicate with the user device 5, in particular the secure element 6, for example, directly and/or through a communication interface 9 to the user device 5. The management application 8 can be provided in the form of a remote manager, such as an eSIM IoT remote manager (eIM) which may be securely identified by means of an application identifier and/or authenticated by means of an authentication certificate. The communication interface 9 may be provided in the form of a logical end-to-end interface (ESep) enabling secure communications between the management application 8 and the secure element 6, which can be used to transfer data packages, such as eUICC Packages, for instance to carry out Profile State Management and eIM configuration tasks by means of the eIM. For example, the communication interface 9 may be provided as a part of a local management application, such as a IoT Profile Assistant (IPA), which may take the form of an IoT Profile Assistant (IPAd) provided to the user device 5, and/or an IoT Profile Assistant provided (IPAe) arranged in the secure element 6. Alternatively, or additionally, the management application 8 and/or communication interface 9 may be provided as a local profile assistant (LPA) provided to the user device 5 and/or arranged in the secure element 6.

Furthermore, the operating system dataset O may comprise and/or may be configured to interact with the basic program data subset B, an installation program dataset I, a diversification program dataset J, the diversified data L, the user profile P and/or security credentials H, including profile identifiers N, authentication certificates M and/or security keys K. The security credentials H may comprise any kind of credentials defined by e.g., the GSMA, or alike. The security keys K may comprise any kind of cryptographic code or key element which may be adapted to interact with the user devices 5, the secure elements 6, and/or the server device 3 of the trusted entity T as an issuer of any part of the basic program data subset B, the installation program dataset I, the diversification program dataset J, the diversified data L, the user profile P and/or the profile identifiers N, the authentication certificates M and/or any component thereof. The authentication certificates may be any kind of electronic certificate, for example, that can be issued by the trusted entity T, for authenticating an origin of the user devices 5, the secure elements 6, the secure storage location 7, the basic program data subset B, the installation program dataset I, the diversification program dataset J, the diversified data L, the user profile P and/or the profile identifiers N, the authentication certificates M and/or any component thereof. Transmission lines (not shown) may be provided for handling and/ or transferring the operating system dataset O may comprise any kind of wired and/or wireless transmission chains, including the Internet (for transmissions "Over-The-Air") as well as other physical and/or non-physical data carriers, which can be configured and secured as desired and required by the configuration system 1 and its components.

In any of the embodiments of the configuration system 1 as described herein, in particular the computing devices 2, can be configured to execute a computer program in the form of a configuration program 10. A computer-readable data carrier 11 can have stored thereon the configuration program 10 and may take the form of a computer-readable medium 12 and/or data carrier signal 13. When carrying out the configuration program 10, the security system 1 and any components thereof communicate as specified in the security program 10. Parameters associated with and/or underlying the security system 1, any of the components thereof and/or any steps S carried out thereby, can be defined in and/or by the configuration program 10.

In a first step S1, the server device 3 may provide any of the data components of the configuration system 1, including the operating system dataset O, possibly along with the installation program dataset I, and/or the diversification program dataset J, respective diversified data L and/or a user profile P associated with the user U, to the secure element 6 of the user device 5, for example through the communication interface 9 to be stored in the secure storage location 7 for deployment to the user U. The user profile P may be created based upon the diversified data L. In particular, the basic data subset E comprises certain security credentials H having a high or even the highest security level conceivable for the secure element 6. In particular, in such a first step, the previous version A of the basic data subset E corresponding to the former version X of the user profile P can be provided to the secure element 6.

In a second step S2, the previous version A of the basic data subset E including the former version X of the application process C may be activated, for example, by an activation signal triggered by the user U through the remote management application 8 and/or the communication interface 9, in order to enable the user device 5 to carry out operations according to the former version X of the user profile P. For activating the user profile P, the previous version the of the basic data subset E, containing respective security credentials H may be used. In a third step 3, after activation and/or authorization through the security credentials H, the user U and/or server device 3 may transfer, create, and/or alter data objects D to and/or in, respectively, the secure element 6, in particular, in line with the predefined data format as required by the previous version A of the basic data subset E and/or the former version X of the user profile P.

In a fourth step S4, a notification signal G may be provided by the server device 3 informing the user U that an update data subset F is available for installation of the secure element 6. Along with the notification signal G, another notification signal G in the form of a data request command for requesting and/or confirming installation of the update data subset F may be made available to be used by the user device 5, for example, in that the user U is allowed to trigger initiation of the update process by respective security credentials H to be checked in the secure element 6. In a fifth step S5, the user U can request installation of the update data subset F. In a sixth step, the update data subset F may be requested by the user U by sending the notification signal G for the update request to the server device 3.

In a sixth step S6, the update data subset F may be provided from the server device 3 to the user device 5, for example, by download through and/or to the communication interface 9 acting as a secure interface, such that the update dataset subset F is ready to be installed in the secure element 6. The update data subset F comprises the following version B of the at least one basic data subset E defining a later version Y of the user profile P. The communication interface 9 can be controlled by the diversification program dataset J. In a seventh step S7, the update may be performed on the secure element 6 with the help of the diversification program dataset J, for example, in that the diversification program dataset J alters and/or updates at least one security credential H is a part of the basic data subset B. Therefore, the diversification program dataset J may establish a data update instance R managing the altering and/or update procedure. The altering and/or update procedure and/or diversification program dataset J can be supervised by the operating system dataset O, for example, in that the operating system dataset all implements a respective supervision instance Q.

During the installation process, the updated a subset F can be adapted and/or serialized in such a way that it can be handled by the operating system dataset O. The adaptation and/or serialization may be performed by the diversification program dataset J. For example, at least 1 of the first memory region 7a and/or second memory region 7b may be assigned to be used by the diversification program dataset J for such data preparations. In and/or from such a dedicated memory region 7a, 7b, the data preparation may take place, while the respective other memory region 7a, 7b can be reserved for other functions, such as data backups and/or holding or operation of the basic program data subset B, the installation program dataset I, the diversification program dataset J, the diversified data L, the user profile P and/or the profile identifiers N, the authentication certificates M and/or any component thereof.

In an eights step S8, the alteration and/or update may be finished, for example, involving a reboot of the secure element 6. In a ninth step S9, the user U and/or the secure entity T may be informed of whether the alteration and/or update process was successful or not. If the alteration and/or update process was not successful, it may be repeated, for example, starting from the fourth step S4 of notifying the user U. If the update process was successful, then in a tenth step S10, it may be checked whether the predefined data format M of at least one data object D matches are required data format N (see Fig. 4).

In the present example, the data provision and step 1 can be associated with a pre-issuance condition W of the user device 5 and/or the secure element 6. Any of the steps taking place after the activation process in step 2 can be associated with a post-issuance condition Z of the user device 5 and/or the secure element 6. Providing the installation program dataset I to the user device 5 and/or the secure element 6 can be regarded as a zeroth step S0 which may take place before first step S1 of providing data to the user device 5 and/or the secure element 6. By means of the installation program dataset I, the basic program data subset B, the installation program dataset I, the diversification program dataset J, the diversified data L, the user profile P and/or the profile identifiers N, the authentication certificates M and/or any component thereof. The basic program data subset B, the installation program dataset I, the diversification program dataset J, the diversified data L, the user profile P and/or the profile identifiers N, the authentication certificates M and/or any component thereof is, respectively, are usually provided to the user device 5 and/or the secure element 6 at a factory, for example at any production facility 20 of the secure element 6, a manufacturing facility 21, including OEM/ODM vendor facilities, and fabrication facilities of the secure element 6, which may involve and/or be administered by the trust entity T and/or the server device 3 (see Figs. 2 and 3).

Fig. 2 shows a schematic illustration of facilities involved in the configuration system 1. For example, the configuration system 1 may involve a production facility 20, a manufacturing facility 21 and/or a storage facility 22 which may interact with each other at a certain point of time t over the respective timeframes for providing the user devices 5. At a first point of time t1, the secure element 6 or batch thereof may be delivered to the production facility 20. At a second point of time t2, certain data components for the secure element 6 may be delivered to the production facility 20. The data components may on the one hand comprise the installation program dataset I, diversification program dataset J and/or operation system dataset O which can be regarded as a firmware suite for the secure element. On the other hand, the data components may comprise the diversified data L, which may comprise data related to and/or constituting any of the security credentials H, for example, as a part of and/or provided as the basic data subset B of the user profile P. In other words, the basic data subset B may be provided based on and/or compiled from the diversified data L.

At a third point of time t3, any of the required data for operating the secure element 6 can be installed and/or mounted on the secure element 6 by the production facility 20, thereby providing a secure element 6 which is customized according to respective requirements. For customization, the production facility 20 can provide the secure element 6, for example, equipped with the basic data subset E, installation program dataset I, diversification program dataset J, operation system dataset O, and/or user profile P, as desired or required in the process for providing the user devices 5. At a fourth point of time t4, the customized secure elements 6 can be delivered to the manufacturing facility 21 and/or storage facility 22.

The manufacturing facility 21 can install the secure elements 6 and the user devices 5 upon receipt of the secure elements 6 from the production facility 20 or may store the secure elements 6 in the storage facility 22. Alternatively, or additionally, the production facility 20 may produce the user devices 5 by installing the secure elements 6, in order to then store the user devices in the storage facility 22 and/or deliver them to customers. After the fourth point of time t4, the secure elements 6 and/or user devices 5 can be regarded as being in the pre-issuance condition W. Afterwards, when delivering the secure element 6 and/or user devices 5 to the customers at the fifth point of time t5, the secure elements 6 and/or user devices 5 can be put into the post-issuance condition Z.

Fig. 3 shows a schematic illustration of a possible data exchange between the facilities involved in the configuration system 1 making use of a method according to the present invention. For example, the configuration system 1 may further comprise a configuration provider 30 and/or a diversification provider 31 which may communicate with other facilities and/or user devices 5 via respective communication networks NET, which can comprise wired and/or wireless private and/or public telecommunication infrastructures provided by, associated to and/or accessible by the respective facilities involved, including the user devices 5. The configuration provider 30, such as a software provider, may provide the installation program dataset I, diversification program data set J and/or operating system dataset O, and may serve as a trusted entity T. The diversification provider 31, such as a data provider, may provide the basic data subset E, update data subset F, and/or diversified data L, and may also serve as a trusted entity T.

For providing the desired and/or required data components to the secure elements 6 and/or user devices 6, again respective data installations and/or mounting may be performed at respective points of time as described with respect to Fig. 3 above. Alternatively, or additionally, data provisions may be performed at any earlier point of time tx and/or later point of time ty by means of the installation program dataset I and/or certification program dataset J for altering and/or updating data components in the secure element 6, in particular, the operation system dataset O and/or basic data subset B, respectively. Therefore, the installation program dataset I and/or certification program dataset J may make use of the communication interface 9 which may enable secure communication via the telecommunication network(s) NET. Thus, previous versions A and/or following versions B of the basic data subset E corresponding to form a versions access and/or later versions of the user profile P may be provided at any of the points of time t1 to t5 as well as earlier point of time tx, later point of time ty before, after, as between during pre-issuance condition W and/or post-issuance condition Z of the secure elements 6 and/or user devices 5.

Any of the data provision may be performed via the installation program dataset I and/or diversification program dataset J. For example, the diversification program dataset J may be incorporated into the installation program dataset I. In other words, the installation program dataset I may comprise the diversification program dataset J.

For data provision, several exemplary configurations are possible. For example, with the help of the diversification dataset J, a "record" can be loaded into a memory region 7a,7b dedicated for operation of the operating system dataset O, from which the operating system dataset O is able to "consume" to absorb the diversified data L. Such a process may be regarded as being similar to a personalization of secure elements 6 in the production facility 20. Alternatively, or additionally, the provisioned diversified data L can be stored in a serialized format into a separate memory region 7a,7b space belonging to the diversification program dataset J, and the operation system dataset O may then consume the data via communication with the help of the diversification program dataset J, for example, through an API. This can be regarded as essentially directly injecting data for the data recovery instead of storing such data by the operation system dataset O during personalization in the production facility 20. In any case, the diversification program dataset J can (also) act as a Data Provisioning Manager (DPM). The installation program dataset I can be put in charge of operation system dataset O updates and loads; and the diversification program dataset J and/or a Data Provisioning Manager, can be in charge of data handling and provisioning, both possibly existing as separate entities.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### Reference Signs

- 1: configuration system
- 2: computing device
- 3: server device
- 4: hardware security module
- 5: user device
- 6: secure element
- 7: secure storage location
- 7a: first memory region
- 7b: second memory region
- 8: remote management application
- 9: communication interface
- 10: configuration program
- 11: computer-readable data carrier
- 12: computer-readable medium
- 13: data carrier signal

- 20: production facility
- 21: manufacturing facility
- 22: storage facility
- 30: configuration provider /software provider
- 31: diversification provider / data provider

- t: time / point of time
- t1: provide secure element
- t2: provide data
- t3: install data
- t4: deliver secure element
- t5: deliver user device
- tx: earlier point of time
- ty: later point of time

- A: previous version
- B: following version
- C: application process
- D: data object
- E: basic data subset
- F: update data subset
- G: notification signal
- H: security credentials
- I: installation program dataset
- J: diversification program dataset
- K: security key
- L: diversified data
- M: authentication certificate
- N: profile identifier
- NET: telecommunication network
- O: operating system dataset
- P: user profile
- Q: supervision instance
- R: data update instance
- S: step
- T: trusted entity
- U: user
- V: operating instance
- W: pre-issuance condition /state
- X: former version
- Y: later version
- Z: post-issuance condition / state
- 50: initialisation
- S1: provide data
- S2: activation process
- S3: provide data object
- S4: notification update available
- S5: notification requesting update
- S6: provide update data
- S7: perform update
- S8: finish update
- S9: assess update success
- S10: check data formats

## Claims

1. Method of configuring a user device (5), in particular for secure operation involving a trusted entity (T), the method comprising the steps of
providing a secure element (6) of the user device (5), such as an eU ICC, with at least one user profile (P) containing diversified data (L) for personalising the secure element (6); and
providing a diversification program dataset (J) configured to manage at least parts of diversified data (L) to securely alter at least one security credential (H) as a part of a basic data subset (B) of the profile dataset (P).

2. Method according to claim 1, wherein the diversification program dataset (J) allows for personalising the secure element (6) in at least one pre-issuance condition (W) and/or at least one post-issuance condition (Z), wherein the at least one pre-issuance condition (W) refers to a point of time before issuing the user device (5) to a user and the at least one post-issuance condition (Z) refers to a point of time after issuing the user device (5) to a user (U).

3. Method according to claim 1 or 2, wherein the basic data subset (B) comprises security credentials (H).

4. Method according to claim 1 to 3, wherein the basic data subset (B) comprises at least one profile identifier (N), security keys (K) and/or authentication certificate (M).

5. Method according to at least one of claims 1 to 4, wherein the diversification program dataset (J) is configured to allow remote access to at least a part of the basic data subset (B).

6. Method according to at least one of claims 1 to 5, wherein the diversification program dataset (J) is personalised with diversified data (L).

7. Method according to claim 5 or 6, wherein the diversification program dataset (J) is configured to update the basic data subset (B) by providing an update data subset (F) to the secure element (6).

8. Method according to claim 7, wherein the update data subset (F) is received by and/or from the trusted entity (T).

9. Method according to claim 7 or 8, wherein the update data subset (F) is adapted and/or serialised to be handled by an operating system dataset (O) for operating the secure element (6).

10. Method according to at least one of claims 1 to 9, wherein the diversification program dataset (J) this configured to communicate via a at least one secure interface of the secure element (6) and/or to allow secure access to the secure element (6).

11. Configuration program (10) for configuring a user device (5), in particular for secure operation involving a trusted entity (T), wherein the configuration program (10) comprises instructions which, when the configuration program (10) is executed by a secure element (6), cause the secure element (6) to carry out a method of at least one of claims 1 to 10.

12. Diversification program dataset (J) for a secure element (6) of a user device (5), such as an eUICC, the diversification program dataset (J) comprising a at least parts of a configuration program (10) according to claim 11 and/or configured to carry out method according to at least one of claims 1 to 10.

13. Computer-readable data carrier (11, 12, 13) having stored thereon a configuration program (10) according to claim 11 and/or a diversification program dataset (J) according to claim 12.

14. User device (3), in particular configured for allowing secure operation involving a trusted entity (T), wherein the user device (3) is configured to carry out a method according to at least one of claims 1 to 10, comprises a configuration program (10) according to claim 11, a diversification program dataset (J) according to claim 12 and/or a computer-readable data carrier (11, 12, 13) according to claim 13.

15. Server device (4), such as a security server providing a secure location, in particular for allowing secure remote operation of user devices (3) involving a trusted entity (T), wherein the server device (4) is configured to carry out a method according to at least one of claims 1 to 10, comprises a configuration program (10) according to claim 11, a diversification program dataset (I) according to claim 12 and/or a computer-readable data carrier (11, 12, 13) according to claim 13.
